# EUROPÄISCHE PATENTSCHRIFT

(11) **EP 3 853 576 B1**
(45) Veröffentlichungstag und Bekanntmachung des Hinweises auf die Patenterteilung: **28.06.2023**
(21) Anmeldenummer: 19758712.4
(22) Anmeldetag: 22.08.2019
(51) Int. Cl.: G01M 13/021

(54) **VERFAHREN ZUR ERMITTLUNG DES GETRIEBESPIELES EINES GETRIEBES**
METHOD FOR ASCERTAINING THE BACKLASH OF A GEAR
PROCÉDÉ PERMETTANT DE DÉTERMINER LE JEU D'UNE TRANSMISSION

(30) Priorität: 19.09.2018 DE 102018215894
(43) Veröffentlichungstag der Anmeldung: 28.07.2021
(73) Patentinhaber: Robert Bosch GmbH, 70442 Stuttgart (DE)
(72) Erfinder: RIES-MUELLER, Klaus, 74906 Bad Rappenau (DE)
(86) Internationale Anmeldenummer: PCT/EP2019/072475
(87) Internationale Veröffentlichungsnummer: WO 2020/057892

(56) Entgegenhaltungen:
- DE-A1- 10 119 724
- DE-A1-102007 030 800
- DE-A1-102011 121 789

## Beschreibung

### Technisches Gebiet

Die Erfindung bezieht sich auf ein Verfahren zur Ermittlung des Getriebespieles eines Getriebes, welches mit einer E-Maschine eines mindestens eine E-Maschine aufweisenden Fahrzeugs gekoppelt ist.

### Stand der Technik

DE 10 2015 120 263 A1 bezieht sich auf ein Verfahren zur Bestimmung des Verschleißes in einer Anordnung, in der ein Motor über eine Übertragungseinrichtung, beispielsweise ein Getriebe eine Last bewegt. Dem Motor ist ein erster Inkrementalgeber und der Last ist ein zweiter Inkrementalgeber zugeordnet. Eine Messdifferenz zwischen den beiden Inkrementalgebern wird zu einem bestimmten Lastfall bestimmt, wobei die Messdifferenz eine Winkeldifferenz sein kann. Folgend wird eine Amplitude einer von der Messdifferenz beschriebenen Schwingung bestimmt und eine Amplitudenfunktion in Abhängigkeit der bestimmten Amplituden berechnet. Diese Amplitudenfunktion wird mit gespeicherten charakteristischen Funktionen verglichen, um zumindest eine nächstliegende charakteristische Funktion aus den gespeicherten charakteristischen Funktionen auszuwählen. Die nächstliegende charakteristische Funktion gibt eine Aussage über die Art einer vorliegenden Nichtlinearität der Übertragungseinrichtung und erlaubt damit Rückschlüsse auf die Art eines Verschleißes, wie beispielsweise das Auftreten eines Getriebespiels.

DE 10 2012 011 757 A1 offenbart ein Verfahren zum Erfassen eines Verdrehspieles eines Antriebsstrangs eine Fahrzeugs. Es wird eine Drehzahldifferenz zwischen Motordrehzahl und einer Referenzdrehzahl, welche beispielsweise durch Multiplikation von der tatsächlich gemessenen Raddrehzahl mit der Übersetzung des Getriebes gebildet wird, vor einem Übergang von einem Schub- in einen Zugbetrieb des Fahrzeugs ermittelt. Dabei kann die Motordrehzahl von einem Motorsteuergerät und die Referenzdrehzahl von einem Bremsensteuergerät erfasst werden. Diese Drehzahldifferenz wird über die Zeit integriert, bis trotz weiterhin positivem Drehmoment am Antriebsstrang entweder ein Rückgang der Motordrehzahl festgestellt wird, oder die Differenz zwischen Motordrehzahl und Referenzdrehzahl im Wesentlichen wieder den Wert vor dem Zeitpunkt des Übergangs vom Schubbetrieb zum Zugbetrieb angenommen hat.

DE 10 2007 030 800 A1 hat ein Verfahren zur Regelung einer mechanischen Ausgangsgröße eines Getriebes zum Gegenstand. Dabei werden Getriebestellungen an zwei verschiedenen, antriebsverbundenen Stellen des Getriebes gemessen und deren Abweichung voneinander als Regelgröße geregelt. Eine Getriebestellung im Sinne von DE 10 2007 030 800 A1 ist eine Winkellage einer Getriebewelle oder deren Drehwinkel. Die Abweichung der beiden gemessenen Getriebestellungen voneinander wird kontinuierlich überwacht und zur Erfassung von Sensorfehlern oder Mechanikdefekten sowie zur Überwachung eines Getriebespieles ausgewertet. Dabei wird die Abweichung mit einem vorgegebenen zulässigen Wert verglichen.

Aus der DE 101 19 724 A1 ist eine Vorrichtung zur Verhinderung von sich in hochfrequenten Schwingungen äußernden Lastschlägen im Antriebsstrang von Kraftfahrzeugen bekannt, wobei die Lastschläge aus einer stoßartigen Anregung resultieren und beispielsweise durch ein Zahneingriffsspiel im Antriebsstrang zum Tragen kommen, welches beim Wechsel vom Schub- in den Druckbetriebsbereich auftritt und zu einem Anschlagen führt.

Aus der DE 10 2011 121 789 A1 ist ein Verfahren zur Bestimmung eines schadhaften Teils in einem Getriebe bekannt, wobei ein Sensor zur Erfassung akustischer Schwingungen mit dem Getriebe in Kontakt gebracht wird, das Getriebe Leerlauf betrieben wird und die eintreibende Welle des Getriebes mit einer Drehzahl betrieben wird.

Zukünftig werden vermehrt Fahrzeuge mit elektrischen Achsantrieben vor allem als Batterieelektrofahrzeuge zum Einsatz kommen. Dabei wird die Leistungselektronik direkt an bzw. auf der E-Maschine angebracht, da dadurch unter anderem Kabelverbindungen und Stecker eingespart werden können. Vorzugsweise werden dabei die elektrische Maschine, das Getriebe und die Leistungselektronik zu einer elektrischen Antriebsachse, einem E-Achsen-Modul, kombiniert. Typischerweise besteht das Getriebe aus einer festen Übersetzung ohne Gangstufen, ohne Kupplung und ohne Torsionsdämpfer. Für das Getriebespiel müssen genaue Toleranzanforderungen der Automobilhersteller über die Fahrzeugleberisdauer gesehen, eingehalten werden. Aufgrund des hochdynamischen elektrischen Antriebes wirkt sich das Getriebespiel stark auf die Fahrbarkeit aus.

### Darstellung der Erfindung

Erfindungsgemäß, wie in Anspruch 1 definiert, wird ein Verfahren zur Ermittlung eines Getriebespieles eines Getriebes, welches mit einer E-Maschine eines mindestens eine E-Maschine aufweisenden Fahrzeugs gekoppelt ist, vorgeschlagen, bei dem zumindest die nachfolgenden Verfahrensschritte durchlaufen werden:
a) Erfassung der Drehzahl der mindestens einen E-Maschine bei einem Fahreingriff und Erfassung aus diesem hervorgehender Drehzahlschwankungen,
b) Auswertung einer hochfrequenten Schwingung, erzeugt durch Erreichen eines unteren Anschlages durch das Getriebe bei Verzögerungsphasen und Erreichen eines oberen Anschlages durch das Getriebe bei Drehrichtungsumkehr bei Beschleunigungsphasen,
c) Ausfilterung hochfrequenter Anteile aus der hochfrequenten Schwingung gemäß Verfahrensschritt b), bei deren Auftreten aus dem Drehzahlsignal eine Lageinformation hinsichtlich eines zugehörigen Drehwinkels gespeichert wird,
d) Ermittlung des Getriebespieles aus der Differenz der Lageinformationen zwischen dem oberen Anschlag und der Lageinformation des unteren Anschlags.

In Weiterbildung des erfindungsgemäß vorgeschlagenen Verfahrens handelt es sich bei dem Fahreingriff beispielsweise um einen ABS-Eingriff, d.h. ein intermittierend erfolgendes Blockieren und wieder Freigeben der Räder des Fahrzeuges, oder um einen einfachen Bremseingriff oder auch um Bremsen im Rahmen einer Rekuperationsfunktion zur Umwandlung kinetischer Energie in elektrische Energie zum Wiederaufladen der Traktionsbatterie.

Beim erfindungsgemäßen Verfahren erfolgt eine Speicherung des ermittelten Getriebespieles abhängig von der Fahrzeuglebensdauer oder auch der Laufleistung in Kilometern des Fahrzeugs. Anhand der gespeicherten Daten des Getriebespiels kann aufgrund einer Zunahme des Getriebespiels auf ein gleichmäßiges Altern durch mechanischen Verschleiß des Getriebes geschlossen werden. Dem erfindungsgemäß vorgeschlagenen Verfahren folgend, erfolgt eine Mittelung von Getriebespielen über mehrere Fahreingriffe über eine bestimmte Fahrstrecke hinweg, wobei auch ein Vergleich der Mittelwerte des Getriebespieles erfolgt.

Wird hierbei ein erster Gradient für einen allmählichen Anstieg der Mittelwerte des Getriebespieles über die Laufleistung oder die Fahrzeuglebensdauer festgestellt, kann auf eine übliche Alterung der Komponenten des Getriebes geschlossen werden, beispielsweise auf einen mechanischen Abrieb der miteinander kämmenden Zahnflanken der Zahnräder des Getriebes. Wird ein zweiter, steiler verlaufender Gradient für den Anstieg der Mittelwerte des Getriebespieles sowie ein Überschreiten einer Diagnoseschwelle detektiert, kann auf einen Defekt des Getriebes und/oder der mindestens einen E-Maschine geschlossen werden. Der erste Gradient sowie der zweite Gradient werden aufgrund der jeweiligen Mittelwerte der ermittelten Getriebespiele bestimmt. Bei Überschreitung der Diagnoseschwellwerte durch mindestens einen Mittelwert des Getriebespieles, erfolgt ein Eintrag in einen Fehlerspeicher des Fahrzeugs, der im Rahmen von Routineuntersuchungen bzw. im Rahmen von Inspektionsterminen ausgelesen wird. Es kann auch bei Überschreitung eines Diagnoseschwellwertes durch einen Mittelwert des ermittelten Getriebespiels eine sofortige Fehlermeldung generiert werden, sowie ein Hinweis dahingehend ausgegeben werden, dass eine Werkstatt aufzusuchen ist.

In Reaktion auf die ermittelten Gradienten, den ersten Gradienten für einen Anstieg der Mittelwerte des Getriebespieles im Hinblick auf eine übliche Alterung oder auf einen zweiten, steiler verlaufenden Gradienten bei einem Anstieg der Mittelwerte des Getriebespieles bei einem sich anbahnenden Defekt, kann in Reaktion darauf eine Reduktion des Drehmomentes der mindestens einen E-Maschine bei einer Beschleunigungsphase des Fahrzeugs vorgegeben werden, um die Fahrbarkeit des Fahrzeugs, beispielsweise bis zum nächsten regulären Inspektionstermin oder bis zur nächstgelegenen Werkstatt zu gewährleisten.

Bei dem erfindungsgemäßen Verfahren können die Mittelwerte des Getriebespieles bei Fahrbarkeitsfunktionen, insbesondere einer Anti-Ruckel-Funktion Berücksichtigung finden. Fahrbarkeitsfunktionen beeinflussen in vorteilhafter Weise den Fahrkomfort. Die Antiruckelfunktion stellt eine dieser Fahrbarkeitsfunktionen dar und bildet einen Teil der Momentensteuerung. Die Antiruckelfunktion dient einerseits der Verbesserung des Fahrkomforts und andererseits dem Schutz von Fahrzeugkomponenten, wie beispielsweise Getriebe, Differential und Übertragungselemente. Im Falle eines abrupten Momentenwechsels beispielsweise ist durch die Antiruckelfunktion gesichert, dass das erforderliche Moment binnen weniger 100 ms angepasst wird. Dadurch können negative, sich auf den Antriebsstrang erstreckende Einflüsse abrupter Momentenwechsel, die zu Schwingungen im Antriebsstrang führen können und zu Beschädigung der oben genannten Komponenten führen können, vermieden. Die Antiruckelfunktion vermeidet mechanische Schwingungen. Die Antiruckelfunktion greift bei hohen Geschwindigkeiten aufgrund der dort selteneren Momentenwechsel weniger stark ein und ist beispielsweise gar nicht wirksam bei Höchstgeschwindigkeit der mindestens einen E-Maschine.

Beim erfindungsgemäß vorgeschlagenen Verfahren besteht zusätzlich die Möglichkeit, die Drehzahlsignale gemäß Verfahrensschritt a) durch eine Frequenzanalyse, insbesondere eine Fast-Fourier-Transformation auszuwerten und bei Veränderung hochfrequenter Anteile auf eine Änderung des Getriebespieles zu schließen.

### Vorteile der Erfindung

Das erfindungsgemäß vorgeschlagene Verfahren bietet in vorteilhafter Weise eine Möglichkeit, über die Fahrzeuglebensdauer gesehen, eine Erkennung eines sich ändernden Getriebespieles zu ermöglichen. Die Erkennung des Getriebespieles kann insbesondere im Rahmen einer Fehlererkennung präventiv genutzt werden, sobald das Getriebespiel einen vorgegebenen Schwellwert überschreitet. Im Vorfeld lassen sich anbahnende Defekte erkennen, bevor die Fahrbarkeit des Fahrzeuges signifikant beeinflusst wird.

Solange die Fahrbarkeit des Fahrzeugs gegeben ist, werden aus der Überschreitung von Diagnoseschwellwerten durch die ermittelten Mittelwerte des Getriebespieles Warnhinweise an den Fahrer ausgegeben, oder es kann in vorteilhafter Weise das zulässige Drehmoment, welches die mindestens eine E-Maschine während der Beschleunigungsphase des Fahrzeugs aufbringt, reduziert werden, so dass die Momentenbelastung eines möglicherweise vorgeschädigten Getriebes herabgesetzt wird und somit die Fahrbarkeit des Fahrzeugs bis Abhilfemaßnahmen ergriffen werden können, gewährleistet bleibt. Die erkannten Getriebespiele bzw. deren Mittelwerte, können bei verschiedenen Funktionen zur Verbesserung der Fahrbarkeit benutzt werden. Eine Fahrbarkeitsverbesserung kann beispielsweise unter Einsatz der Antiruckelfunktion dahingehend erfolgen, dass eine Begrenzung des Drehmomentes bzw. einer Dynamik am Antrieb gesteuert wird. So wird beispielsweise bei einem größer ermittelten Spiel im Getriebe die Fahrzeugbeschleunigung auf eine Maximalbeschleunigung begrenzt und dadurch die Dynamik reduziert, was die mechanische Belastung der Komponenten des Antriebsstranges nicht unerheblich herabsetzt.

### Kurze Beschreibung der Zeichnungen

Anhand der Zeichnung wird die Erfindung nachstehend eingehender beschrieben.

Es zeigt:
- Figur 1: eine Ansicht eines Teils eines E-Achsenmoduls,
- Figur 2: eine Explosionsdarstellung des E-Achsenmoduls gemäß Figur 1 mit schematisch angedeuteter E-Maschine,
- Figur 3: eine perspektivische Ansicht eines Getriebes,
- Figur 4: eine Auswertung eines Fahreingriffs,
- Figur 5: eine Darstellung eines oberen Anschlages für das Getriebe bzw. eines unteren Anschlags für das Getriebe bei Drehrichtungsumkehr,
- Figur 6: eine Darstellung eines Mittelwertverlaufes des Getriebespiels, aufgetragen über die Kilometerlaufleistung eines Fahrzeugs.

Ausführungsvarianten

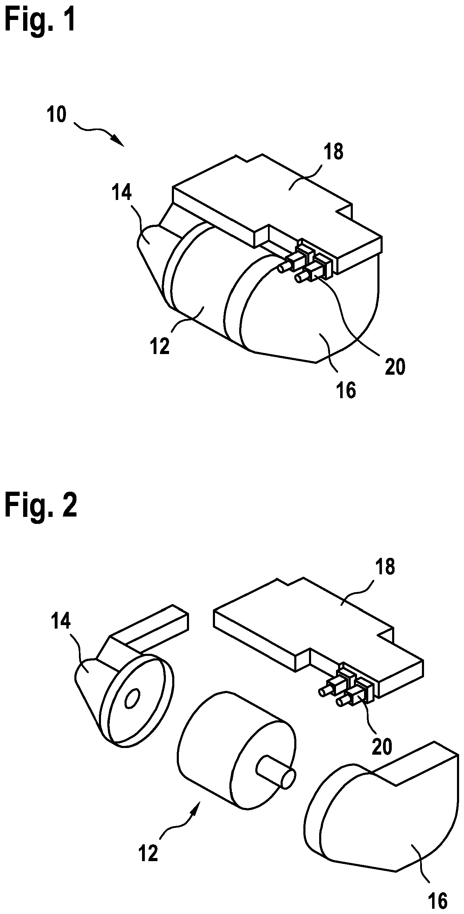

Der Darstellung gemäß Figur 1 ist ein Teil eines E-Achsenmoduls 10 zu entnehmen. Das E-Achsenmodul 10 umfasst ein erstes Gehäuseteil 14 sowie ein zweites Gehäuseteil 16. Auf den beiden Gehäuseteilen 14 bzw. 16 befindet sich eine Leistungselektronik 18 an der elektrische Anschlüsse 20 ausgeführt sind.

Figur 2 zeigt das E-Achsenmodul 10 gemäß der Darstellung in Figur 1 in Explosionsdarstellung. Aus der Darstellung gemäß Figur 2 geht hervor, dass im ersten Gehäuseteil 14 sowie im zweiten Gehäuseteil 16 eine E-Maschine 12 angeordnet ist. Auf den beiden Gehäuseteilen 14 bzw. 16 ist in deren montierten Zustand die Leistungselektronik 18 mit daran ausgebildeten elektrischen Anschlüssen 20 aufgenommen.

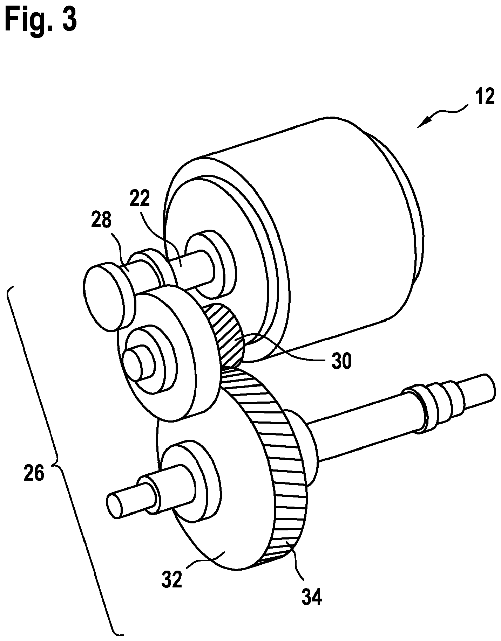

Der Figur 3 ist eine E-Maschine 12 zu entnehmen, über deren Abtrieb 22 ein Getriebe 24 angetrieben ist. Bei dem Getriebe 24 handelt es sich in der Darstellung gemäß der Figur 3 um eine Stirnradstufe 26. Diese umfasst ein auf dem Abtrieb 22 der E-Maschine 12 aufgenommenes Ritzel 28. Das Ritzel 28 kämmt mit einem Zwischenrad 30, welches wiederum ein Stirnrad 32 antreibt, welches auf einer separaten Welle aufgenommen ist. Aus Gründen der Schallerzeugung, d.h. um eine geringe Geräuschemission durch das Getriebe 24 zu erreichen, sind die Verzahnungen des Ritzels 28, des Zwischenrades 30 und des Stirnrades 32 der Stirnradstufe 26 als Schrägverzahnungen 34 beschaffen.

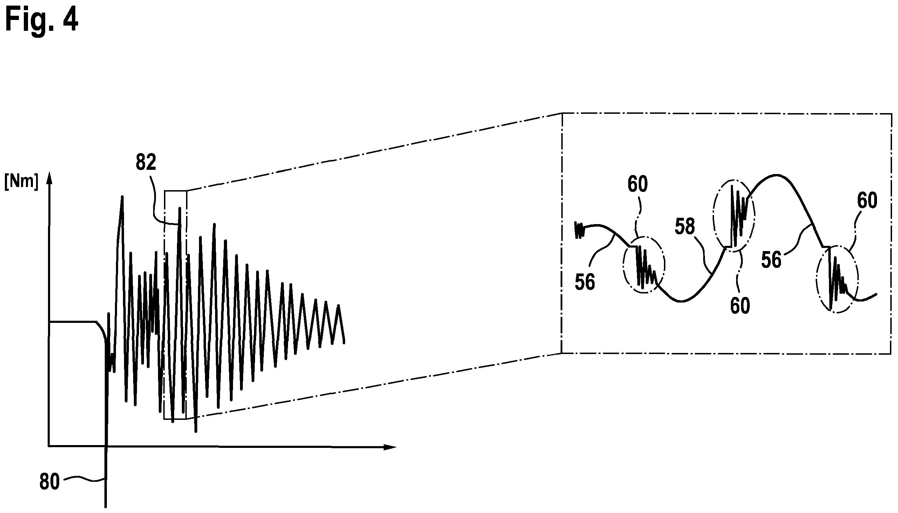

Figur 4 zeigt eine Auswertung eines Fahreingriffs.

Ein Ablauf des erfindungsgemäß vorgeschlagenen Verfahrens stellt sich wie folgt dar:
Bei einem Fahreingriff 80, beispielsweise einem Bremseingriff im Rahmen des Eingriffs des ABS-Systems des Fahrzeugs, wird die Drehzahl der mindestens einen E-Maschine 12 erfasst und ausgewertet. Die Ermittlung des Getriebespieles 40 erfolgt wie obenstehend beschrieben. Eine dauerhafte Speicherung des ermittelten Wertes 50 für das Getriebespiel 40 wird beispielsweise abhängig von der Fahrzeuglebensdauer bzw. der Kilometerlaufleistung des Fahrzeugs durchgeführt. Bei einem erneuten Fahreingriff 80, z.B. einem ABS-Eingriff, wird erneut ein Wert 50 für ein Getriebespiel 40 ermittelt.

Es erfolgt eine Mittelung der erfassten Getriebespiele 40, d.h. die Bestimmung von Mittelwerten 62 für das Getriebespiel 40 über mehrere Bremseingriffe über eine bestimmte Fahrstrecke, beispielsweise wird eine Mittelung des Getriebespieles, GS_M = Mittel von Getriebespiel 1 bis Getriebespiel 5 vorgenommen, oder innerhalb einer bestimmten Fahrstrecke, beispielsweise bis 5000 km Laufleistung 64 des Fahrzeugs. Danach erfolgt ein Vergleich der Mittelwerte 62 über die Fahrzeuglebensdauer. Die Berücksichtigung des gemittelten Getriebespieles wird bei Fahrbarkeitsfunktionen, wie beispielsweise der Anti-Ruckel-Dämpfung vorgenommen. Bezugszeichen 82 bezeichnet ein Fenster einer Drehzahlschwankung, die in Figur 4 vergrößert herausgehoben ist und Verzögerungsphasen 56 sowie Beschleunigungsphasen 58 umfasst.

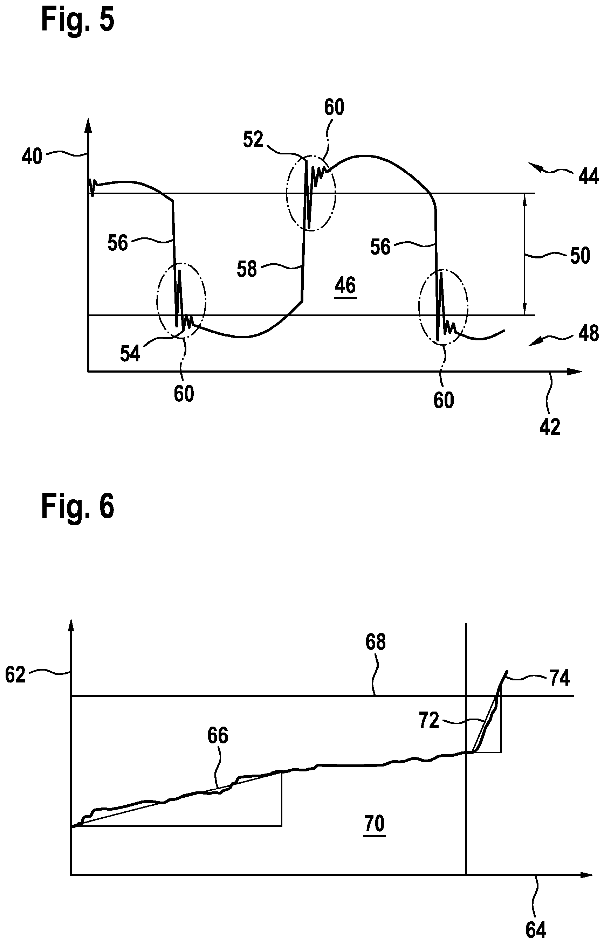

Für den Fall, dass das gemittelte Getriebespiel 40 einen Fehlerschwellwert überschreitet, erfolgt ein Eintrag in einen Fehlerspeicher. Eine Folge dieser Überschreitung (vergleiche Darstellung gemäß Figur 6) ist beispielsweise eine Reduktion des Drehmomentes, welches über die mindestens eine E-Maschine 12, etwa bei Beschleunigungsphasen 58 bzw. bei Rekuperationsphasen zur Umwandlung kinetischer Energie in elektrische Energie, gesetzt wird.

Figur 5 ist eine Darstellung des Verlaufes des Getriebespieles aufgetragen über einen Drehwinkel/Lageinformation zu entnehmen.

Bei einem Fahreingriff 80, beispielsweise einem vom Fahrer initiierten Bremsen oder einem von der ABS-Steuerung initiierten ABS-Eingriff oder beim Bremsen zur Energierekuperation, d.h. zum Umwandeln kinetischer Energie in elektrische Energie, kommt es zu Drehzahlschwankungen, die Verzögerungsphasen 56 und Beschleunigungsphasen 58 umfassen. Diese Drehzahlschwankungen treten im Antriebsstrang und damit auch an der mindestens einen E-Maschine 12 sowie am Getriebe 24 auf. Im Rahmen der Verzögerungsphase 56 wird beim Bremsen des Rades des Fahrzeugs das Getriebe 24 bzw. der Antriebsstrang kurzzeitig an einen unteren Anschlag 54 geführt. Im Rahmen der Drehzahlschwankungen erfolgt beim Beschleunigen des Rades, beispielsweise beim kurzzeitigen Lösen der Bremse das Erreichen eines oberen Anschlages 52 durch das Getriebe 24 in entgegengesetzter Drehrichtung. Dieses "kurzzeitige Anschlagen" führt zum Auftreten einer hochfrequenten Schwingung. Unter dem Begriff "Anschlagen", bzw. dem oberen Anschlag 52 und dem unteren Anschlag 54 ist im vorliegenden Zusammenhang zu verstehen, dass miteinander kämmende Zähne innerhalb der Stirnradstufe 26 entweder miteinander innerhalb eines ersten Kontaktbereiches 44 bzw. eines zweiten Kontaktbereiches 48 eine Flankenberührung ausführen. Innerhalb des in Figur 5 dargestellten Bereiches 46 "Getriebe frei" berühren sich die Flanken der miteinander kämmenden Zähne der Stirnradstufe 26 gerade nicht. Wie aus Figur 4 hervorgeht, führt das kurzzeitige "Anschlagen", d.h. die kurzzeitig auftretende Flankenberührung der Zähne miteinander kämmender Ritzel 28, dem Zwischenrad 30 und Stirnrad 32, zum Auftreten einer schnell abklingenden hochfrequenten Schwingung 60. Durch das Auswerten des Abstandes zwischen dem oberen Anschlag 52 (positiver Anschlag) und dem unteren Anschlag 54 (negativer Anschlag) kann das Getriebespiel 40 - im in Figur 5 dargestellten Beispiel beträgt der Wert 50 für das Getriebespiel 40 0,2 mm - bestimmt werden. Hierfür werden die hochfrequenten Anteile aus der hochfrequenten Schwingung 60 herausgefiltert. Immer wenn diese auftreten, d.h. entsprechende Signale am Filterausgang einen Schwellwert überschreiten, wird die dazugehörige Lageinformation 42, d.h. der Drehwinkel gespeichert. Aus der Differenz der Lageinformationen 42 in Bezug auf den Drehwinkel, an dem der obere Anschlag 52 bzw. der untere Anschlag 54 erreicht wird, kann ein Wert 50 für das Getriebespiel 40 ermittelt werden.

Zusätzlich zu dem in Anspruch 1 definierten Verfahren besteht auch die Möglichkeit, das Drehzahlsignal gemäß Verfahrensschritt a) auch einer Frequenzanalyse, beispielsweise einer Fast-Fourier-Transformation zu unterziehen. Durch Veränderung beispielsweise der hochfrequenten Anteile, kann auf eine Veränderung des Getriebespieles 40 geschlossen werden.

Der Darstellung gemäß Figur 6 ist das gemittelte Getriebespiel, aufgetragen über die Laufleistung 64 des Fahrzeugs, zu entnehmen.

Aus der Darstellung gemäß Figur 6 geht hervor, dass die Mittelwerte 62 für das Getriebespiel 40 über die Fahrzeuglebensdauer bzw. über die Laufleistung 64 des Fahrzeugs zunehmen. Diese Zunahme lässt sich in einem ersten Gradienten 66 abbilden, wobei die Steigung des ersten Gradienten auf einen natürlichen Verschleiß und damit auf eine übliche Alterung hindeutet. Innerhalb des Diagnosebereiches 70 bleibt der erste Gradient 66 im Wesentlichen konstant. Bei Auftreten eines Fehlers überschreitet ein zweiter Gradient 72 für die Mittelwerte 62 einen Diagnoseschwellwert 68. Im Vergleich zum ersten Gradienten 66 ist der zweite Gradient 72 in Bezug auf die Mittelwerte 62 deutlich steiler. Für den Fall, dass der zweite Gradient 72 für die Mittelwerte 62 den Diagnoseschwellwert 68 als Schwellwertüberschreitung übersteigt, kommt es zu einem Fehlereintrag in einen Fehlerspeicher. Dieser Eintrag in den Fehlerspeicher initiiert beispielsweise eine Begrenzung des maximalen Drehmomentes, was über die mindestens eine E-Maschine 12 auf das Getriebe 24 bei Beschleunigungsphasen 58 übertragen wird. Anstelle von Absolutwerten für das Getriebespiel 40, können auch die erwähnten ersten Gradienten 66 und zweiten Gradienten 72 zur Diagnose herangezogen werden. Bei langsam erfolgenden Änderungen im Rahmen des ersten Gradienten 66 wird auf eine übliche Alterung aufgrund des Verschleißes der Komponenten des Getriebes 24 geschlossen, während bei schnellen Änderungen, d.h. der Detektion eines zweiten Gradienten 72 auf eine zunehmende Schädigung bzw. einen baldigen Ausfall von Komponenten des Getriebes 24 geschlossen wird. In diesem Falle können entsprechende Hinweise an den Fahrer ausgegeben werden, die das von der mindestens E-Maschine 12 abgegebene Moment reduziert, und dergleichen mehr.

Das erfindungsgemäß vorgeschlagene Verfahren kann bei einfachen Bremseingriffen außerhalb des Eingriffes eines ABS-Systems angewendet werden. Das erfindungsgemäß vorgeschlagene Verfahren kann auch dann verwendet werden, falls der ABS-Eingriff mittels einer Ansteuerung der mindestens einen E-Maschine 12 erfolgt, ebenso im Rahmen von Bremsen innerhalb eines Rekuperationsmodus zur Umwandlung kinetischer Energie des Fahrzeugs in elektrische Energie zum Aufladen der Traktionsbatterie. Das erfindungsgemäß vorgeschlagene Verfahren lässt sich auch auf Mehr-GangSchaltgetriebe übertragen. Dabei ist das jeweils auftretende Getriebespiel 40 abhängig von der Gangstufe zu ermitteln. Des Weiteren besteht die Möglichkeit, das erfindungsgemäß vorgeschlagene Verfahren auf andere elektrische Antriebssystems, beispielsweise eine elektrische Lenkung oder Industrieantriebe zu übertragen.

## Patentansprüche

1. Verfahren zur Ermittlung des Getriebespieles (40) eines Getriebes (24), welches mit einer E-Maschine (12) eines mindestens eine E-Maschine (12) aufweisenden Fahrzeugs gekoppelt ist, **gekennzeichnet dadurch, dass** zumindest die nachfolgenden Verfahrensschritte durchlaufen werden:
a) Erfassung der Drehzahl der mindestens einen E-Maschine (12) bei einem Fahreingriff (80) und Erfassung aus diesem hervorgehender Drehzahlschwankungen,
b) Auswertung einer hochfrequenten Schwingung (60), erzeugt durch Erreichen eines unteren Anschlages (54) durch das Getriebe (24) bei Verzögerungsphasen (56) und Erreichen eines oberen Anschlages (50) durch das Getriebe (24) bei Drehrichtungsumkehr in Beschleunigungsphasen (58),
c) Ausfilterung hochfrequenter Anteile aus der hochfrequenten Schwingung (60) gemäß b), bei deren Auftreten aus dem Drehzahlsignal eine Lageinformation (42) hinsichtlich eines zugehörigen Drehwinkels gespeichert wird,
d) Ermittlung des Getriebespieles (40) aus der Differenz der Lageinformationen (42) zwischen dem oberen Anschlag (52) und dem unteren Anschlag (54).

2. Verfahren gemäß Anspruch 1, **dadurch gekennzeichnet, dass** der Fahreingriff (80) durch einen ABS-Eingriff, einen einfachen Bremseingriff, oder ein Bremsen über Rekuperation gegeben ist.

3. Verfahren gemäß Anspruch 1, **dadurch gekennzeichnet, dass** eine dauerhafte Speicherung des Getriebespieles (40) abhängig von der Fahrzeuglebensdauer oder der Laufleistung (64) des Fahrzeugs erfolgt.

4. Verfahren gemäß Anspruch 1, **dadurch gekennzeichnet, dass** eine Mittelung von Getriebespielen (40) über mehrere Fahreingriffe (80) über eine bestimmte Fahrstrecke hinweg und ein Vergleich von Mittelwerten (62) des Getriebespieles (40) erfolgt.

5. Verfahren gemäß Anspruch 4, **dadurch gekennzeichnet, dass** ein erster Gradient für einen Anstieg der Mittelwerte (62) des Getriebespieles (40) über eine Laufleistung (64) auf eine übliche Alterung des Getriebes (24) und der mindestens einen E-Maschine (12) schließen lässt.

6. Verfahren gemäß Anspruch 4, **dadurch gekennzeichnet, dass** ein zweiter, steilerer Gradient (72) für den Anstieg der Mittelwerte (62) des Getriebespieles (40) und ein Überschreiten eines Diagnoseschwellwertes (68) auf einen Defekt am Getriebe (24) und/oder der mindestens einen E-Maschine (12) schließen lassen.

7. Verfahren gemäß Anspruch 1, **dadurch gekennzeichnet, dass** bei Überschreitung eines Diagnoseschwellwertes (68) durch einen Mittelwert (62) des Getriebespieles (40) ein Eintrag in einen Fehlerspeicher erfolgt.

8. Verfahren gemäß der Ansprüche 6 oder 7, **dadurch gekennzeichnet, dass** eine Reduktion des Drehmomentes der mindestens einen E-Maschine (12) bei einer Beschleunigungsphase (58) des Fahrzeugs vorgegeben wird.

9. Verfahren gemäß Anspruch 1, **dadurch gekennzeichnet, dass** die Mittelwerte (62) des Getriebespieles (40) bei Fahrbarkeitsfunktionen, insbesondere einer Anti-Ruckel-Dämpfung Berücksichtigung finden.

10. Verfahren gemäß Anspruch 1, **dadurch gekennzeichnet, dass** das Drehzahlsignal gemäß Verfahrensschritt a) einer Frequenzanalyse, insbesondere einer Fast-Fourier-Transformation unterzogen wird und bei Veränderung hochfrequente Anteile auf eine Änderung des Getriebespieles (40) geschlossen wird.

## Claims

1. Method for ascertaining the gear backlash (40) of a gear (24) which is coupled to an electric machine (12) of a vehicle having at least one electric machine (12), **characterized in that** at least the following method steps are run through:
a) detecting the rotational speed of the at least one electric machine (12) in the case of a driving intervention (80) and detecting fluctuations in rotational speed caused by it,
b) evaluating a high-frequency vibration (60) generated by the gear (24) reaching a lower stop (54) during deceleration phases (56) and by the gear (24) reaching an upper stop (50) when there is a reversal in the direction of rotation in acceleration phases (58),
c) filtering out high-frequency components from the high-frequency vibration (60) according to b), at the occurrence of which positional information (42) relating to an associated rotational angle from the rotational speed signal is stored,
d) ascertaining the gear backlash (40) from the difference between the positional information (42) for the upper stop (52) and that for the lower stop (54).

2. Method according to Claim 1, **characterized in that** the driving intervention (80) takes the form of an ABS intervention, a simple braking intervention, or braking by means of recuperation.

3. Method according to Claim 1, **characterized in that**, dependent on the service life of the vehicle or the mileage (64) of the vehicle, permanent storage of the gear backlash (40) takes place.

4. Method according to Claim 1, **characterized in that** instances of gear backlash (40) are averaged over a number of driving interventions (80) over a specific driving distance, and a comparison of mean values (62) of the gear backlash (40) is carried out.

5. Method according to Claim 4, **characterized in that** a first gradient for an increase in the mean values (62) of the gear backlash (40) over a mileage (64) indicates that customary ageing of the gear (24) and of the at least one electric machine (12) can be inferred.

6. Method according to Claim 4, **characterized in that** a second, steeper gradient (72) for the increase in the mean values (62) of the gear backlash (40) and for the exceeding of a diagnostic threshold value (68) indicates that a defect in the gear (24) and/or the at least one electric machine (12) can be inferred.

7. Method according to Claim 1, **characterized in that**, when a diagnostic threshold value (68) is exceeded by a mean value (62) of the gear backlash (40), an entry is made in a fault memory.

8. Method according to Claims 6 or 7, **characterized in that** a reduction in the torque of the at least one electric machine (12) is specified in an acceleration phase (58) of the vehicle.

9. Method according to Claim 1, **characterized in that** the mean values (62) of the gear backlash (40) are taken into account in drivability functions, in particular anti-judder damping.

10. Method according to Claim 1, **characterized in that** the rotational speed signal according to method step a) is subjected to frequency analysis, in particular a fast-Fourier transformation, and a change in the gear backlash (40) is inferred when high-frequency components change.

## Revendications

1. Procédé permettant de déterminer le jeu de transmission (40) d'une transmission (24) qui est accouplée à une machine électrique (12) d'un véhicule présentant au moins une machine électrique (12),
**caractérisé en ce qu'**au moins les étapes de procédé suivantes sont exécutées :
a) détecter la vitesse de rotation de ladite au moins une machine électrique (12) lors d'une intervention de conduite (80) et détecter des variations de vitesse de rotation qui en résultent,
b) évaluer une oscillation à haute fréquence (60) générée parce que la transmission (24) atteint une butée inférieure (54) dans des phases de décélération (56) et parce que la transmission (24) atteint une butée supérieure (50) dans des phases d'accélération (58) avec inversion du sens de rotation,
c) éliminer par filtrage des composantes haute fréquence de l'oscillation à haute fréquence (60) selon le point b) à l'apparition desquelles une information de position (42) concernant un angle de rotation associé est stockée à partir du signal de vitesse de rotation,
d) déterminer le jeu de transmission (40) à partir de la différence des informations de position (42) entre la butée supérieure (52) et la butée inférieure (54) .

2. Procédé selon la revendication 1, **caractérisé en ce que** l'intervention de conduite (80) est réalisée par une intervention d'ABS, une intervention de freinage ordinaire ou un freinage par récupération.

3. Procédé selon la revendication 1, **caractérisé en ce qu'**un stockage permanent du jeu de transmission (40) est effectué en fonction de la durée de vie de véhicule ou du kilométrage (64) du véhicule.

4. Procédé selon la revendication 1, **caractérisé en ce qu'**une communication de jeux de transmission (40) concernant plusieurs interventions de conduite (80) sur un trajet déterminé et une comparaison de moyennes (62) du jeu de transmission (40) sont effectuées.

5. Procédé selon la revendication 4, **caractérisé en ce qu'**un premier gradient pour une augmentation des moyennes (62) du jeu de transmission (40) par rapport à un kilométrage (64) permet de conclure à un vieillissement normal de la transmission (24) et de ladite au moins une machine électrique (12).

6. Procédé selon la revendication 4, **caractérisé en ce qu'**un deuxième gradient (72) plus raide pour l'augmentation des moyennes (62) du jeu de transmission (40) et un dépassement d'une valeur seuil de diagnostic (68) permettent de conclure à un défaut au niveau de la transmission (24) et/ou de ladite au moins une machine électrique (12).

7. Procédé selon la revendication 1, **caractérisé en ce qu'**une entrée dans une mémoire de défaut est effectuée en cas de dépassement d'une valeur seuil de diagnostic (68) par une moyenne (62) du jeu de transmission (40).

8. Procédé selon les revendications 6 ou 7, **caractérisé en ce qu'**une réduction du couple de ladite au moins une machine électrique (12) est prédéfinie dans une phase d'accélération (58) du véhicule.

9. Procédé selon la revendication 1, **caractérisé en ce que** les moyennes (62) du jeu de transmission (40) sont prises en compte pour des fonctions de maniabilité, en particulier pour un amortissement des à-coups.

10. Procédé selon la revendication 1, **caractérisé en ce que** le signal de vitesse de rotation selon l'étape de procédé a) est soumis à une analyse de fréquence, en particulier à une transformation de Fourier rapide, et en cas de modification des composantes haute fréquence, on conclut à une modification du jeu de transmission (40) .
